# EUROPÄISCHE PATENTSCHRIFT

(11) **EP 3 526 546 B1**
(45) Veröffentlichungstag und Bekanntmachung des Hinweises auf die Patenterteilung: **10.11.2021**
(21) Anmeldenummer: 17767735.8
(22) Anmeldetag: 28.08.2017
(51) Int. Cl.: G01C 21/30, G01C 21/32, G01C 21/28

(54) **VERFAHREN UND SYSTEM ZUR LOKALISIERUNG EINES FAHRZEUGS**
METHOD AND SYSTEM FOR THE LOCALISATION OF A VEHICLE
PROCÉDURE ET SYSTÈME POUR LA LOCALISATION D'UNE VÉHICULE

(30) Priorität: 17.10.2016 DE 102016220249
(43) Veröffentlichungstag der Anmeldung: 21.08.2019
(73) Patentinhaber: Robert Bosch GmbH, 70442 Stuttgart (DE)
(72) Erfinder: PINK, Oliver, 71254 Ditzingen (DE); HASBERG, Carsten, 74360 Ilsfeld-Auenstein (DE); HIENDRIANA, Danny, 71636 Ludwigsburg (DE); SCHROEDER, Christoph, Sunnyvale, CA 94087 (US); RASP, Philipp, 72827 Wannweil (DE)
(86) Internationale Anmeldenummer: PCT/EP2017/071522
(87) Internationale Veröffentlichungsnummer: WO 2018/072915

(56) Entgegenhaltungen:
- DE-A1-102010 028 090
- US-A1- 2016 187 144

## Beschreibung

Die Erfindung betrifft ein Verfahren und ein System zur Lokalisierung eines Fahrzeugs. Insbesondere betrifft die Erfindung ein Verfahren und ein System zur Lokalisierung eines Fahrzeugs unter Verwendung einer digitalen Karte.

### Stand der Technik

Fahrerassistenzsysteme sind bekannt und werden weitreichend zur Steuerung von Fahrzeugen verwendet. Ferner wird es in Zukunft eine Vielzahl von hochautomatisierten bzw. vollautomatisierten Fahrerassistenzfunktionen geben, bei denen das Fahrzeug automatisch ohne dauerhafte Überwachung durch den Fahrer gesteuert wird. Wichtig vor allem für hochautomatisiertes und vollautomatisiertes Fahren ist dabei die Fähigkeit des Fahrzeugs bzw. die Fähigkeit der entsprechenden Funktion, jederzeit eine genaue und aktuelle Lokalisierung des Fahrzeugs vornehmen zu können. Das heißt, es besteht die Anforderung, immer genaue Informationen darüber haben, wo sich das Fahrzeug momentan befindet.

Dabei sind Fahrerassistenzsysteme und automatisierte Fahrsysteme häufig von der Verwendung einer digitalen Karte bzw. einer elektronischen Straßenkarte abhängig, wobei zur Lokalisierung ein Vergleich von durch Sensoren erfassten Merkmalen mit denen in einer zur Verfügung stehenden Karte erfolgen kann. Die Lokalisierung ist darauf angewiesen, dass die in der Karte abgelegten Merkmale aktuell sind und der Realität entsprechen.

In der Druckschrift KR2010000386A werden ein Fahrzeugnavigationssystem und ein Verfahren zum Aktualisieren einer elektronischen Karte beschrieben, wobei empfangene Änderungsdaten mit bestehenden Kartendaten verglichen werden und daraufhin ein Prozentsatz eines Änderungsausmaßes ("change rate") eines jeweiligen Kartenbereichs berechnet wird, wobei das berechnete Änderungsausmaß sich je nach Kartenbereich unterscheiden kann. Falls der auf diese Weise berechnete Prozentsatz einen Schwellenwert überschreitet, wird automatisch eine entsprechende Aktualisierung des Kartenbereichs vorgenommen. Dabei können sich die Schwellenwerte je nach Bereich oder Straßentyp unterscheiden. Ansonsten wird die Entscheidung über die Änderung dem Fahrer überlassen, der zur Entscheidungshilfe über eine Anzeige informiert wird.

US 2016/0187144 A1 offenbart ein Verfahren zur Lokalisation eines Fahrzeugs, in dem visuell erfassste Merkmale in der Umgebung eines Fahrzeugs nach deren Form, Größe und zeitlichen Varianz selektiert, zusammengefasst und mit in einer Datenbank abgespeicherten Merkmalen verglichen werden.

DE 10 2010 028 090 A1 offenbart ein Navigationsverfahren und System für ein Fahrzeug, wobei eine Navigation des Fahrzeugs in Abhängigkeit von gespeicherten Navigationsdaten erfolgt, die Vertrauenslevel aufweisen, welche ein Vertrauen in eine Korrektheit der Navigationsdaten angeben.

Es besteht weiterhin der Wunsch, ein System und Verfahren bereitzustellen, mit dem eine fehlerhafte oder veraltete Karte schnellstmöglich detektiert und dem Fahrzeug und/oder der Funktion gemeldet werden kann.

### Offenbarung der Erfindung

Es werden ein System und ein Verfahren zur Fahrzeuglokalisierung, ein entsprechendes Fahrzeug, und ein Computerprogrammprodukt, das zur Verwendung in Zusammenhang mit einem Fahrzeug vorgesehen ist, nach den unabhängigen Patentansprüchen bereitgestellt.

Bevorzugte Weiterbildungen der Erfindung ergeben sich aus den abhängigen Ansprüchen.

Nach einem Aspekt der Erfindung wird ein Verfahren zur Fahrzeuglokalisierung bereitgestellt, bei dem eine digitale Karte verwendet wird, die Merkmale einer Umgebung eines Fahrzeugs beschreibt. Dabei werden durch die digitale Karte eines oder mehrere vorbestimmte Attribute, wobei die Attribute eine Angabe über eine Zyklusdauer oder Änderungsrate und eine Angabe eines Zeitpunkts einer letzten Änderung eines Merkmals aufweisen, wobei die Attribute zur Charakterisierung von möglichen auftretenden Änderungen der von der Umfeldsensorik erfassten Merkmale im Vergleich zu der momentan vorliegenden digitalen Karte vorgesehen sind, den Merkmalen zugewiesen. Ferner werden basierend auf den zugewiesenen Attributen, jeweilige Wahrscheinlichkeiten für die Änderungen wenigstens eines der Merkmale bestimmt, und das Fahrzeug wird unter Einbeziehung der bestimmten Wahrscheinlichkeiten lokalisiert.

Nach einem anderen Aspekt der Erfindung wird ferner ein entsprechendes System zur Fahrzeuglokalisierung bereitgestellt, wobei das System eine digitale Karte, die von einer Umfeldsensorik erfasste Merkmale einer Umgebung eines Fahrzeugs beschreibt und eine Lokalisierungseinheit zum Lokalisieren des Fahrzeugs unter Verwendung der digitalen Karte aufweist. Zur Berücksichtigung einer im zeitlichen Verlauf auftretenden Änderung eines von der Umfeldsensorik erfassten Merkmals im Vergleich zum entsprechenden Merkmal der digitalen Karte weist die digitale Karte bezüglich dem jeweiligen Merkmal eines oder mehrere vorbestimmte entsprechende Attribute auf, wobei die Attribute eine Angabe über eine Zyklusdauer oder Änderungsrate und eine Angabe eines Zeitpunkts einer letzten Änderung eines Merkmals aufweisen. Ferner ist die Lokalisierungseinheit eingerichtet, eine zugehörige Wahrscheinlichkeit für die Änderung des Merkmals anhand der Attribute zu Bestimmen und beim Lokalisieren des Fahrzeugs einzubeziehen. Mit anderen Worten, werden die Merkmale durch die Attribute jeweils durch eine Angabe der Zyklusdauer bzw. Änderungsrate sowie eine Angabe des Zeitpunktes der letzten Änderung ergänzt.

Durch die Aspekte der Erfindung kann eine Identifizierung oder Erkennung von fehlerhaften oder veralteten Karten verbessert werden. Die wird insbesondere dadurch ermöglicht, dass die digitale Karte, zusätzlich zu den herkömmlichen Angaben, für die durch die Karte beschriebenen Merkmale ein Attribut verzeichnen kann, das zur Bestimmung einer aktuellen

Änderungswahrscheinlichkeit für das Merkmal dient. Damit kann vorteilhaft dem Umstand Rechnung getragen werden, dass gerade bei einer steigenden Anzahl von Merkmalen, die mit der fortlaufenden Entwicklung der Lokalisierungstechnik genauer einbezogen werden können, auch zunehmend damit zu rechnen ist, dass die Merkmale zumindest teilweise nicht mehr aktuell sind und stattdessen zwischenzeitlich Veränderungen vorliegen.

Dabei kann das Zuweisen der einen oder mehreren vorbestimmten Attribute ein Verwenden einer digitalen Karte, die um die vorbestimmten Attribute erweitert wurde, aufweisen, wobei das Erweitern beispielsweise durch ein Bereitstellen einer zusätzlichen digitalen Kartenschicht geschehen kann. Ferner kann das Zuweisen auch ein Empfangen der vorbestimmten Attribute durch das Lokalisierungssystem und anschließendes Erweitern der digitalen Karte um die Attribute aufweisen.

Dadurch, dass bei dem vorliegenden Verfahren die Karte um entsprechende Attribute erweitert wird, kann eine solche Änderung vorgreifend gezielt einkalkuliert und konkreter eingeschätzt werden, auch wenn noch keine entsprechende Kartenaktualisierung vorliegt. Somit kann die Robustheit der Lokalisierung gegenüber Änderungen der Umgebung bedeutend erhöht werden.

Beispielsweise kann es sich bei der Lokalisierung des Fahrzeugs ergeben, dass ein zugewiesenes Attribut eines Merkmals daraufhin deutet, dass im Vergleich zu anderen Merkmalen oder im Vergleich zu einem vorherigen Zeitpunkt die Wahrscheinlichkeit für eine Änderung erhöht ist. Auf diese Weise liegt in diesem Fall ein Indiz für eine veraltete bzw. fehlerhafte Karte vor, das nach einer bevorzugten Vorgehensweise automatisch durch das System verarbeitet werden kann.

So kann insbesondere bei autonomen Fahrmoden, in denen das Fahrzeug selbst die Kontrolle über die Fahrzeugsteuerung übernimmt, so dass kein Fahrer in die Fahrzeugsteuerung eingreifen muss, das Lokalisierungssystem entscheiden, das Merkmal nicht für die Lokalisierung zu verwenden oder im Zweifelsfall einer Sensormessung den Vorzug zu geben. Ferner ist auch denkbar, dass in Antwort auf eine bestimmte Wahrscheinlichkeit eines Merkmals, wenn die Wahrscheinlichkeit einen vorbestimmten Schwellenwert erreicht hat, eine Aktualisierungsanforderung bezüglich der digitalen Karte initiiert wird.

Bevorzugt kommen als zu erweiternde Merkmale grundsätzlich alle Arten von für die Fahrzeuglokalisierung relevanten Elementen des Inhalts der digitalen Karte in Betracht. Dabei kann der Anteil der Merkmale, die mit Attributen erweitert werden, je nach Karte variieren.

Nach einer besonders bevorzugten Ausführungsform betreffen die Merkmale grundsätzlich, zumindest in erster Linie, von Menschen beeinflusste Merkmale. Diese Merkmale unterliegen sowohl einem Alterungsprozess, welcher in regelmäßigen Zyklen deren Instandsetzung bedingt, als auch strukturellen Änderungen.

Die Merkmale können bevorzugt Objekte, die in der Umgebung des Fahrzeugs angeordnet sind, betreffen, wie beispielsweise Spurmarkierungen, Brücken, Gebäude, Schilderbrücken, Verkehrsschilder, usw. in der Nähe des Fahrzeugs. Jedoch können die Merkmale auch weitergehende Informationen oder Metainformationen aufweisen.

Somit sind die Aspekte der Erfindung nicht auf bestimmte Merkmale beschränkt, sondern können grundsätzlich alle Arten von Merkmalen betreffen.

In manchem Ausführungsformen kann ein Merkmal nicht nur ein einzelnes Objekt betreffen, sondern auch mehrere Objekte und Untermerkmale. So ist denkbar, dass ein Merkmal in der digitalen Karte eine Angabe über eine Anzahl von bestimmten Objekten oder Merkmalen betrifft, wie beispielsweise eine Anzahl von Spurmarkierungen.

Die Attribute können insbesondere als Attributname und Attributwert dargestellt werden, wobei die Attributwerte dediziert einzelnen Merkmalen zugeordnet sein können. Mit andere Worten, jedes Merkmal kann das entsprechende Attribut und einen zugehörigen Wert aufweisen. Die verwendeten Attribute können beispielweise in einer zusätzlichen Kartenschicht gespeichert werden.

Anschaulich können nach den Aspekten der Erfindung die Merkmale somit um mindestens ein neues Attribut ergänzt werden, das sich auf eine Charakterisierung der anzunehmenden Änderungen, bzw. die Wahrscheinlichkeiten dafür, bezieht.

Nach einer bevorzugten Ausführungsform weist mindestens eines der Attribute einen nach der jeweiligen Art eines jeweiligen Merkmals spezifizierten Wert auf. So können verschiedene Arten von Merkmalen, beispielsweise Schilder oder Straßenmarkierungen, jeweils ähnlich oder einheitlich behandelt werden. Die vergebenen Werte können dabei je nach Merkmalsart im Vergleich zueinander abgestuft sein.

Dadurch, dass die Merkmale in Arten eingeteilt werden können und jeweils je nach Art mit einem spezifischen Wert versehen werden können, kann die

Verarbeitung der Attribute effizient und wirksam durchgeführt werden. Beispielsweise können zur Ermittlung der verfahrensgemäßen artspezifischen Attributwerte vorteilhaft Ergebnisse von statistischen Erhebungen verwendet werden. Ferner kann die Anzahl der zu vergebenden Werte begrenzt werden und auf eine bestimmte Anzahl eingeschränkt werden.

Zusätzlich können Attribute verwendet werden, die grundsätzlich neutral gegenüber der Merkmalsart sind. Diese können sich jeweils auf eine Information, die auf ein bestimmtes Merkmal ausgerichtet ist, beziehen und können sich beispielsweise aus einer vorigen Aktualisierung des Kartenmaterials oder aus zusätzlichen Informationsquellen und Ermittlungen ergeben.

Nach einer weiteren bevorzugten Ausführungsform wird basierend auf den Attributen ein Modell für eine zeitliche Entwicklung der Wahrscheinlichkeit der Änderung eines jeweiligen Merkmals bestimmt.

Dadurch kann die Genauigkeit der Lokalisierung weiter erhöht und gleichzeitig die Verarbeitung beschleunigt werden. Ferner kann auf diese Weise die Wahrscheinlichkeit vorteilhaft auch für zukünftige Zeitpunkte berechnet und bei Bedarf abgerufen werden.

Nach einer vorteilhaften Weiterbildung kann für die zeitliche Entwicklung ein periodischer Verlauf angenommen werden. Diese Ausführungsform kann insbesondere vorteilhaft mit einer Zyklusdauer und einem Zeitpunkt der letzten Änderung als die gewählten Attribute angewandt werden. Ferner kann der Verlauf überlinear ansteigend angenommen werden, so dass sich insgesamt anschaulich ein spitzer, sägezahnförmiger Verlauf ergibt.

Dadurch kann insbesondere eine Tatsache berücksichtigt werden, dass bei vielen Merkmalen typischerweise Änderungen kurz nach einer Erstellung oder Änderungen des beschriebenen Merkmals nur mit geringer Rate vorkommen, wobei aber mit zunehmender Lebensdauer die Änderungsrate zunehmend ansteigt.

Durch die Aspekte der Erfindung kann somit auf komfortable Weise zu jedem betrachteten Merkmal eine wahrscheinliche Verfügbarkeit oder Aktualität ermittelt werden, wodurch die Zuverlässigkeit der Lokalisierung erhöht werden kann.

Nach einer Ausführungsform der Erfindung werden bei Aktualisierungen der digitalen Karte, oder bei Teilaktualisierungen, die nur eine Anzahl der Merkmale betreffen, die einem jeweiligen Merkmal zugeordneten Attribute, insbesondere deren Werte, entsprechend angepasst. Dabei können die Merkmalswerte insbesondere geändert oder erstmals zugewiesen werden. Ferner können dabei auch Wahrscheinlichkeitsverläufe neu berechnet und/oder korrigiert werden.

Nach einer bevorzugen Ausführungsform weist das System ferner eine Attributerfassungseinheit auf. Mit dieser können bestehende Karten und ihre Merkmale um die zusätzlichen verfahrensgemäßen Attribute, beispielsweise um ein Attribut, das die Änderungsrate beschreibt, erweitert werden. Dazu kann die Attributerfassungseinheit mit einem Speicher für die digitale Karte verbunden sein, in dem die erfassten Attribute zum Zuweisen insbesondere in einer zusätzlichen Kartenschicht gespeichert werden.

Ferner weist das System bevorzugt eine Attributaktualisierungseinheit zum Aktualisieren der entsprechenden Attribute und deren Werte in Antwort auf eine Aktualisierung der Kartendaten auf. Die Aktualisierungseinheit kann mit dem Speicher für die digitale Karte verbunden sein und dazu eingerichtet sein, die erfindungsgemäßen zusätzlichen Attribute bei einer Kartenaktualisierung abzugleichen und gegebenenfalls anzupassen. Dies kann ein Ändern, Löschen, oder Erstellen des Attributs und des Attributwerts sein.

Nach einer besonderen Anwendung der Erfindung werden Merkmale im Umfeld des Fahrzeugs unter Verwendung einer Umfeldsensorik erfasst. Ferner kann dabei ein Vergleich der erfassten Merkmale mit den Kartendaten vorgenommen werden. Weiterhin können basierend auf das Ergebnis des Vergleichs die ermittelten Wahrscheinlichkeiten hinzugezogen werden. So kann, wenn der Vergleich eine Ambivalenz ergibt, eine Priorisierung und/oder Gewichtung der Merkmale basierend auf eine aus den Attributen bestimmte jeweilige wahrscheinliche Verfügbarkeit oder Aktualität vorgenommen werden. Die Summe der auf diese Weise priorisierten bzw. gewichteten Merkmale kann dann durch einen Lokalisierungsfilter verarbeitet werden.

Diese Ausführungsform ist besonders vorteilhaft bei Fahrzeugen anzuwenden, die sich in einem autonomen Fahrmodus befinden.

Nach einem weiteren Aspekt der Erfindung wird auch ein Fahrzeug, wie beispielsweise ein autonom fahrendes Fahrzeug, bereitgestellt. Dabei ist eine Steuereinheit des Fahrzeugs mit dem erfindungsgemäßen System zur Fahrzeuglokalisierung verbunden, wobei die Steuereinheit konfiguriert ist, zur Lokalisierung des Fahrzeugs das erfindungsgemäße Verfahren anzuwenden.

Ferner wird nach einem weiteren Aspekt der Erfindung auch ein Computerprogrammprodukt zur Verwendung in Zusammenhang mit einem Fahrzeug bereitgestellt. Das Computerprogrammprodukt weist Befehle auf, die die oben beschriebenen verfahrensgemäßen Schritte implementieren. Die Befehle sind in einen Speicher ladbar, der mit einer Steuereinheit des Fahrzeugs verbunden ist oder verbunden werden kann. Dabei ist das Computerprogrammprodukt so eingerichtet, dass wenn die Befehle durch die Steuereinheit ausgeführt werden, das Fahrzeug durch das erfindungsgemäße Verfahren lokalisiert wird.

### Kurzbeschreibung der Zeichnungen

Bevorzugte Ausführungsformen der vorliegenden Erfindung werden nachfolgend anhand der beigefügten Zeichnungen näher erläutert. Es zeigen:
Fig. 1 ein System zur Lokalisierung eines Fahrzeugs in einer Umgebung, nach einer Ausführungsform der Erfindung,
Fig. 2 ein Diagramm eines typischen zeitlichen Verlaufs für eine Wahrscheinlichkeit einer Änderung von Merkmalen einer digitalen Karte, nach einer Ausführungsform der Erfindung, und
Fig. 3 ein Blockdiagramm, das Aspekte des erfindungsgemäßen Systems und Verfahrens zur Fahrzeuglokalisierung zeigt, nach einer Ausführungsform der Erfindung.

### Beschreibung von Ausführungsformen

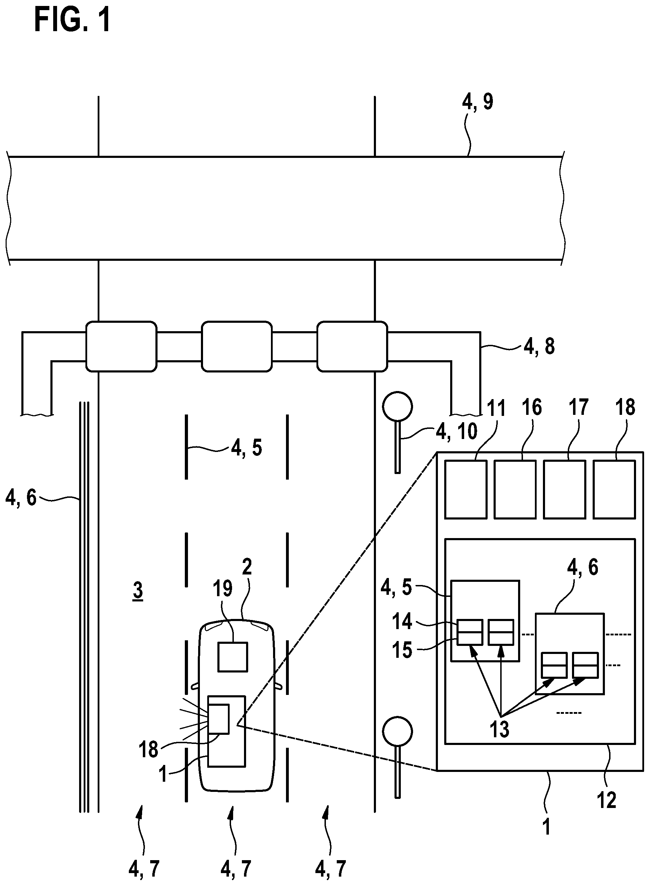

Die Fig. 1 zeigt ein System 1 zur Fahrzeuglokalisierung nach einer Ausführungsform der Erfindung. Durch das System wird das Fahrzeug 2 innerhalb der Umgebung 3 lokalisiert, wobei die Umgebung 3 hier in der Zeichnung lediglich durch ein Bezugszeichen nahe dem Fahrzeug 2 angedeutet ist. Hier handelt es sich um das nähere Umfeld 3 des Fahrzeugs, das beispielsweise eine Straßenkreuzung oder eine Straße oder ein Teil einer Autobahn sein kann. Die Umgebung 3 zeichnet sich durch das Vorhandensein von einer Vielzahl von Merkmalen 4 aus, an denen sich das Fahrzeug 2 orientieren kann. Die Merkmale 4 weisen beispielsweise Spurmarkierungen 5, Leitplanken 6, Fahrspuren 7, Schilderbrücken 8, Brücken 9, und Verkehrsschilder 10 auf. Ferner weist das System 1 eine Lokalisierungseinheit 11 zum Lokalisierung des Fahrzeugs unter Verwendung einer digitalen Karte 12 auf. Die digitale Karte 12 weist Daten zur Beschreibung der Merkmale 4 auf. Um dies zu veranschaulichen, sind in der Zeichnung die in der Umgebung 3 vorkommenden Merkmale 4 auch in der Karte 12 gezeigt. Ferner weisen die Merkmale 4 in der Karte 12 Attribute 13 auf. Die Attribute 13 umfassen zwei Aspekte und haben einen Attributnamen 14, bzw. eine Attributart, sowie einen Wert 15, von denen in der Zeichnung der Übersicht halber nur jeweils einer mit einem Bezugszeichen versehen ist. Obgleich die Fig. 1 stark schematisch die Komponenten der digitalen Karte 12 in einem Blockdiagramm veranschaulichend darstellt, kann die digitale Karte 12 in realen Beispielen in Datenform vorliegen.

Die Attribute 13 sind dazu vorgesehen, die herkömmlichen Kartendaten und deren Merkmale und Attribute um bestimmte Attribute 13 zu erweitern, die dazu durch die digitale Karte 12 den Merkmalen 4 zugewiesen werden. Die neuen Attribute 13 weisen Informationen zur Beschreibung von möglichen auftretenden Änderungen der gespeicherten Merkmale 4 im Vergleich zu den realen Merkmalen 4 der Umgebung 4 des Fahrzeugs 2 auf. Dabei sind die Attribute 13 so ausgelegt, dass durch sie eine jeweilige Wahrscheinlichkeit für eine Änderung oder Aktualität eines jeweiligen Merkmals, hier beispielsweise des Merkmals 5 oder des Merkmals 6, hergeleitet werden kann. Beispielsweise kann eine Attributart 14 eine angenommene zeitliche Änderungsrate des jeweiligen Merkmals 4 sein, und eine andere Attributart 14 kann ein Zeitpunkt einer letzten dem System 1 bekannten Änderung des jeweiligen Merkmals 4 sein. Zur Erstellung der Attribute 13 kann eine Attributerfassungseinheit 16, bzw. eine Attributerfassungs- und Erstellungseinheit 16 des Systems 1 verwendet werden. Ferner weist das System eine Attributaktualisierungseinheit 17 auf, die zum Aktualisieren der Attribute und deren Werte in Antwort auf eine Aktualisierung der herkömmlichen Kartendaten eingerichtet ist.

Das System 1 bzw. das Fahrzeug weisen ferner eine Umfeldsensorik 18 auf. Diese ist dazu vorgesehen, das Umfeld 3 des Fahrzeugs mittels Sensoren, wie Radar, Lidar, Ultraschall, usw. zu erfassen und die Merkmale 4 zu detektieren. Durch einen Vergleich von durch die Umfeldsensorik 18 erfassten Merkmalen 4 mit denen in der Karte 12 kann eine genaue Lokalisierung des Fahrzeugs 2 durchgeführt werden. Insbesondere kann sehr genau die Position und die Orientierung gegenüber der Umgebung ermittelt werden. Ferner kann durch das System 1 und die zusätzlichen Attribute 13 die Qualität der Karte 12 sichergestellt werden, das heißt, es kann vermieden werden, veraltete oder nicht mehr vorhandene Kartendaten über Merkmale 4 zu verwenden. Dies wird insbesondere deswegen ermöglicht, weil durch die verbesserte digitale Karte 12 eine angenommene Aktualität oder Verfügbarkeit der Merkmale 4 auf zuverlässige Weise ermittelt werden kann.

Ferner ist in der Fig. 1 die Steuereinheit 19 des Fahrzeugs 2 gezeigt. Das System 1 wird nach dieser Ausführungsform wird durch die Steuereinheit 19 des Fahrzeugs 2 angesteuert.

Die Steuereinheit 19 kann das Fahrzeug 2 in einem autonomen Fahrmodus oder Fahrerassistenzmodus unter Verwendung des Lokalisierungssystems 1 steuern. Dabei liefert das Lokalisierungssystem 1 die Position und Orientierung des Fahrzeugs 2 in Bezug auf die Umgebung 3.

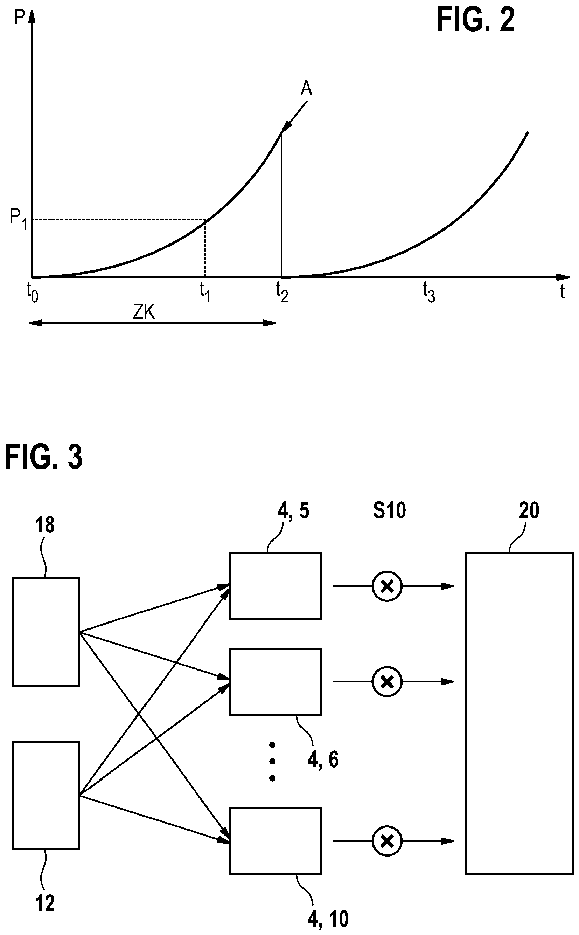

In der Fig. 2 wird ein Diagramm eines typischen zeitlichen Verlaufs einer Wahrscheinlichkeit P einer Änderung von Merkmalen 4 einer digitalen Karte 12 nach einer Ausführungsform der Erfindung gezeigt. In der Fig. 2 zeigt die Abszissenachse die Zeit t, und die Ordinatenachse zeigt die Wahrscheinlichkeit P. Wie hier ferner gezeigt wird, hängt der zeitliche Verlauf der Wahrscheinlichkeit P für die Änderung im Wesentlichen von zwei Parametern ab. Dies sind hier eine Zyklusdauer ZK und ein Zeitpunkt einer letzten Änderung t₀. Die Zyklusdauer entspricht beispielsweise einer typischen Lebensdauer oder einer Wartungsperiode, oder allgemein, einer Zeitdauer, nach der üblicherweise eine Änderung des Merkmals eintritt.

Hinsichtlich der Fig. 1, die jeweiligen Größen bzw. Werte von t₀ und ZK werden als Werte 15 der Attribute13 zu dem jeweiligen Merkmal 4 der digitalen Karte 12 eingetragen. Wie aus dem dargestellten Graphen in Fig. 2 abzulesen ist, ist am aktuellen Zeitpunkt t₁ eine Änderungswahrscheinlichkeit von p₁ gegeben, wobei ferner damit zu rechnen ist, dass sich die Änderungswahrscheinlichkeit P in nächster Zeit beträchtlich erhöht. Ferner ist zum Zeitpunkt t₂ mit hoher Wahrscheinlichkeit mit einer Änderung A zu rechnen, da das Merkmal seine typische Lebensdauer bereits erreicht hat. Falls aber beispielsweise zum Zeitpunkt t₃ noch keine Änderung verzeichnet werden konnte, ist mit einer gewissen Wahrscheinlichkeit davon auszugehen, dass die Karte 12 nicht mehr aktuell ist. Dieser Zustand kann gemeldet werden oder kann vom System 1, falls möglich, überprüft werden lassen. Falls andererseits die Änderung A tatsächlich stattgefunden hat, und entsprechend aktualisierte Kartendaten vorliegen, so ist t₁ der neue Zeitpunkt der letzten Änderung. Falls die Änderung, was in der Regel der Fall ist, nicht genau zum vorkalkulierten Zeitpunkt t₁ stattgefunden haben sollte, können das Modell und die Attributdaten entsprechend angepasst werden und eine korrigierte Verlaufsfunktion mit anderen Parametern verwendet werden.

Obgleich die Fig. 2 lediglich einen typischen anzunehmenden Änderungswahrscheinlichkeitsverlauf andeuten soll, wird dies jedoch durch die geeigneten Parameter in den verwendeten hinzugefügten Attributen für die Lokalisierung des Fahrzeugs nutzbar gemacht.

Die Zyklusdauer bzw. Änderungsrate wird je nach Merkmal oder Art des Merkmals vergeben. Die folgende Tabelle 1 zeigt exemplarische ausgewählte Arten von Merkmalen und dazu die angenommenen Änderungsraten:

**Tabelle 1**

| *Art des Merkmals* | *Änderungsrate* |
|---|---|
| Brücke | niedriq (d.h. langer Lebenszyklus) |
| Anzahl von Fahrspuren | mittel |
| Schilderbrücke | mittel |
| Spurmarkierunq | hoch |
| Leitplanken | hoch |
| Verkehrsschilder | sehr hoch |

Die dadurch bestimmten Wahrscheinlichkeiten können direkt für die Fahrzeuglokalisierung verwendet werden, was insbesondere bei autonomen Fahrzeugen besonders vorteilhaft nutzbar ist.

Die Fig. 3 zeigt ein Blockdiagramm, dass Aspekte des erfindungsgemäßen Systems und Verfahrens zur Fahrzeuglokalisierung zeigt, nach einer Ausführungsform der Erfindung. Wie in der Fig. 3 gezeigt wird, gehen sowohl Messungen der Umfeldsensorik 18 als auch die Daten der digitalen Karte 12 in eine Bestimmung eines Merkmals 4 ein. Auf diese Weise kein ein Netz aus Merkmalspositionen erstellt werden, die durch den Lokalisierungsfilter 20 verarbeitet werden. Im Vergleich zu herkömmlichen System, bei denen lediglich die Positionen der verschiedenen Merkmale durch den Filter fusioniert werden und lediglich eine allgemeine Lösung zur Lage und Orientierung des Fahrzeugs ausgegeben werden kann, wird hier eine Gewichtung und Priorisierung S10 vorgenommen. Die Gewichtung und Priorisierung S10 greift in dem Fall, wenn sich Unsicherheiten ergeben bei einem Vergleich der Sensormessdaten mit den Kartendaten.

Anschaulich gesagt, wenn das System 1 beispielsweise erkennt, dass sich aufgrund der Berücksichtigung eines Merkmals 4 in der Karte eine andere ermittelte Position und/oder Lage des Fahrzeugs 2 ergibt als ohne Berücksichtigung dieses Merkmal 4, so kann, wenn ermittelt wurde, dass das Merkmal 4 mit hoher Wahrscheinlichkeit bereits verändert oder nicht mehr aktuell ist, dieses Merkmal 4 entsprechend weniger oder nicht für die Lokalisierung berücksichtigt werden. Ferner kann anschaulich gesagt eine Rangfolge oder Reihenfolge der Berücksichtigung der Merkmale generiert werden.

So kann beispielsweise, wenn bekannt ist, dass ein Merkmal erst kürzlich geändert wurde, davon ausgegangen werden, dass die Wahrscheinlichkeit P für eine erneute Änderung A relativ niedrig ist und diesem Merkmal daher ein hohes Gewicht beziehungsweise eine hohe Priorität eingeräumt werden. Oder es kann bei Uneindeutigkeiten beispielsweise davon ausgegangen werden, dass ein verschobenes Verkehrsschild wahrscheinlicher ist als eine verschobene Schilderbrücke, was in der digitalen Karte durch entsprechende Attributwerte berücksichtigt wird.

## Patentansprüche

1. Verfahren zur Fahrzeuglokalisierung unter Verwendung einer digitalen Karte (12), die von einer Umfeldsensorik (18) erfasste Merkmale (4) einer Umgebung (3) eines Fahrzeugs (2) beschreibt, mit den Schritten:
Zuweisen von einem oder mehreren vorbestimmten Attributen (13) zu den Merkmalen (4) durch die digitale Karte (12), wobei die Attribute (13) eine Angabe über eine Zyklusdauer (ZK) oder Änderungsrate und eine Angabe eines Zeitpunkts (t₀) einer letzten Änderung (A) eines Merkmals (4) aufweisen, wobei die Attribute (13) zur Charakterisierung von möglichen auftretenden tatsächlichen Änderungen (A) der von der Umfeldsensorik (18) erfassten Merkmale (4) gegenüber der momentan vorliegenden digitalen Karte (12) vorgesehen sind,
**gekennzeichnet durch**
Bestimmen, basierend auf den zugewiesenen Attributen (13), von zugehörigen Wahrscheinlichkeiten (P) für Änderungen (A) wenigstens eines der Merkmale (4), und
Lokalisieren des Fahrzeugs (2) unter Einbeziehung der bestimmten zugehörigen Wahrscheinlichkeiten (P).

2. Verfahren nach Anspruch 1, wobei mindestens eines der Attribute (13) einen nach der jeweiligen Art eines jeweiligen Merkmals (4) spezifizierten Wert (15) aufweist.

3. Verfahren nach Anspruch 1 oder 2, wobei basierend auf den Attributen (13) ein Modell für eine zeitliche Entwicklung der Wahrscheinlichkeit (P) der Änderung (A) eines Merkmals (4) bestimmt wird.

4. Verfahren nach Anspruch 3, wobei für die zeitliche Entwicklung ein periodischer und/oder insbesondere stückweise überlinear ansteigender, sägezahnähnlicher Verlauf bestimmt wird.

5. Verfahren nach einem der vorhergehenden Ansprüche, wobei Merkmale (4) im Umfeld des Fahrzeugs (2) unter Verwendung einer Umfeldsensorik (18) erfasst werden und mit den Merkmalen (4) der digitalen Karte (12) verglichen werden, wobei, wenn der Vergleich eine Ambivalenz ergibt, eine Priorisierung und/oder Gewichtung (S10) der Merkmale (4) basierend auf eine aus den Attributen (13) bestimmte jeweilige wahrscheinliche Verfügbarkeit oder Aktualität vorgenommen wird.

6. Verfahren nach einem der vorhergehenden Ansprüche, wobei bei einer Aktualisierung der digitalen Karte (12) die einem jeweiligen Merkmal (4) zugeordneten Attribute (13), insbesondere deren Werte (15), entsprechend angepasst werden.

7. System (1) zur Fahrzeuglokalisierung, aufweisend:
eine digitale Karte (12), die von einer Umfeldsensorik (18) erfasste Merkmale (4) einer Umgebung (3) eines Fahrzeugs (2) beschreibt, und
eine Lokalisierungseinheit (11) zum Lokalisieren des Fahrzeugs (2) unter Verwendung der digitalen Karte (12),
wobei, zur Berücksichtigung einer im zeitlichen Verlauf auftretenden Änderung (A) eines von der Umfeldsensorik (18)erfassten Merkmals (4) im Vergleich zum entsprechenden Merkmal (4) der digitalen Karte (12), die digitale Karte (12) bezüglich dem jeweiligen Merkmal (4) eines oder mehrere vorbestimmte Attribute (13) aufweist, wobei die Attribute (13) eine Angabe über eine Zyklusdauer (ZK) oder Änderungsrate und eine Angabe eines Zeitpunkts (t₀) einer letzten Änderung (A) eines Merkmals (4) aufweisen, und
**dadurch gekennzeichnet, dass**
die Lokalisierungseinheit (11) eingerichtet ist, eine zugehörige Wahrscheinlichkeit (P) für die Änderung (A) des Merkmals (4) anhand der Attribute (13) zu bestimmen und beim Lokalisieren des Fahrzeugs (2) einzubeziehen.

8. System (1) nach Anspruch 7, ferner aufweisend:
eine Attributerfassungseinheit (16) zum Einlesen oder Erfassen der vorbestimmten Attribute (13), die mit einem Speicher für die digitale Karte (12) verbunden ist, und
eine Attributaktualisierungseinheit (17) zum Aktualisieren der entsprechenden Attribute (13) und deren Werte (15) in Antwort auf eine Aktualisierung der Kartendaten.

9. System (1) nach Anspruch 7 oder 8, wobei die Merkmale (4) durch den Menschen erstellte oder beeinflusste Merkmale (4), wie beispielsweise Spurmarkierungen, Brücken, Gebäude, Anzahl von Fahrspuren oder Schilderbrücken, Verkehrsschilder, aufweisen.

10. Fahrzeug (2), insbesondere autonom fahrendes Fahrzeug (2), wobei eine Steuereinheit (19) des Fahrzeugs (2) mit einem System (1) zur Fahrzeuglokalisierung nach einem der Ansprüche 7 bis 9 verbunden ist, wobei die Steuereinheit (19) des Fahrzeugs (2) eingerichtet ist, zur Lokalisierung des Fahrzeugs (2) das Verfahren nach einem der Ansprüche 1 bis 6 anzuwenden.

11. Computerprogrammprodukt zur Verwendung in Zusammenhang mit einem Fahrzeug (2), mit Befehlen, die in einen Speicher ladbar sind, der mit einer Steuereinheit (19) des Fahrzeugs (2) verbunden ist, wobei, wenn die Befehle durch die Steuereinheit (19) ausgeführt werden, das Fahrzeug (2) durch das Verfahren nach einem der Ansprüche 1 bis 6 lokalisiert wird.

## Claims

1. Method for locating a vehicle using a digital map (12) that describes features (4) of surroundings (3) of a vehicle (2) as captured by a surroundings sensor system (18), comprising the following steps:
assigning one or more predetermined attributes (13) to the features (4) through the digital map (12), wherein
the attributes (13) contain information about a cycle time (ZK) or rate of change and information about a time (t₀) of a last change (A) to a feature (4), wherein the attributes (13) are intended to characterize possible occurring actual changes (A) to the features (4) captured by the surroundings sensor system (18) in relation to the currently available digital map (12),
**characterized by**
determining associated probabilities (P) of changes (A) to at least one of the features (4) based on the assigned attributes (13), and
locating the vehicle (2) incorporating the determined associated probabilities (P).

2. Method according to Claim 1, wherein at least one of the attributes (13) has a value (15) specified depending on the respective type of a respective feature (4).

3. Method according to Claim 1 or 2, wherein a model of a temporal evolution of the probability (P) of the change (A) to a feature (4) is determined based on the attributes (13) .

4. Method according to Claim 3, wherein a periodic and/or in particular piecewise superlinearly rising sawtooth-shaped profile is determined for the temporal evolution.

5. Method according to one of the preceding claims, wherein features (4) in the surroundings of the vehicle (2) are captured using a surroundings sensor system (18) and are compared with the features (4) of the digital map (12), wherein, when the comparison reveals ambivalence, the features (4) are prioritized and/or weighted (S10) based on a respective probable availability or up-to-dateness determined from the attributes (13).

6. Method according to one of the preceding claims, wherein, when the digital map (12) is updated, the attributes (13) associated with a respective feature (4), in particular their values (15), are adapted accordingly.

7. Vehicle location system (1), having:
a digital map (12) that describes features (4) of surroundings (3) of a vehicle (2) as captured by a surroundings sensor system (18), and
a location unit (11) for locating the vehicle (2) using the digital map (12),
wherein, in order to take into consideration a change (A) occurring over time to a feature (4) captured by the surroundings sensor system (18) in comparison to the corresponding feature (4) of the digital map (12), the digital map (12) contains one or more predetermined attributes (13) in relation to the respective feature (4), wherein the attributes (13) contain information about a cycle time (ZK) or rate of change and information about a time (t₀) of a last change (A) to a feature (4), and
**characterized in that**
the location unit (11) is designed to determine an associated probability (P) of the change (A) to the feature (4) based on the attributes (13) and to incorporate same when locating the vehicle (2).

8. System (1) according to Claim 7, furthermore having:
an attribute capturing unit (16) for reading in or capturing the predetermined attributes (13), said attribute capturing unit being connected to a memory for the digital map (12), and
an attribute update unit (17) for updating the corresponding attributes (13) and their values (15) in response to an update to the map data.

9. System (1) according to Claim 7 or 8, wherein the features (4) contain features (4) created or influenced by humans, such as for example lane markings, bridges, buildings, number of lanes or gantries and road signs.

10. Vehicle (2), in particular autonomously driving vehicle (2), wherein a control unit (19) of the vehicle (2) is connected to a vehicle location system (1) according to one of Claims 7 to 9, wherein the control unit (19) of the vehicle (2) is designed to apply the method according to one of Claims 1 to 6 in order to locate the vehicle (2).

11. Computer program product for use in connection with a vehicle (2), containing commands that are able to be loaded into a memory connected to a control unit (19) of the vehicle (2), wherein the vehicle (2) is located by the method according to one of Claims 1 to 6 when the commands are executed by the control unit (19).

## Revendications

1. Procédé de localisation de véhicule en utilisant une carte numérique (12) qui décrit des particularités (4) d'un entourage (3) d'un véhicule (2) détectées par un système de capteurs d'environnement (18), comprenant les étapes consistant à :
affecter un ou plusieurs attributs prédéterminés (13) aux particularités (4) par la carte numérique (12), les attributs (13) présentant une indication concernant une durée de cycle (ZK) ou un taux de changement et une indication d'un temps (t₀) d'un dernier changement (A) d'une particularité (4), les attributs (13) étant prévus pour caractériser des changements réels potentiels (A) des particularités (4) détectées par le système de capteurs d'environnement (18) par rapport à la carte numérique (12) actuellement présente,
**caractérisé par** les étapes consistant à
sur la base des attributs affectés (13), déterminer des probabilités associées (P) de changements (A) d'au moins l'une des particularités (4), et
localiser le véhicule (2) en tenant compte des probabilités associées (P) déterminées.

2. Procédé selon la revendication 1, dans lequel au moins l'un des attributs (13) présente une valeur (15) spécifiée selon le type respectif d'une particularité (4) respective.

3. Procédé selon la revendication 1 ou 2, dans lequel, sur la base des attributs (13), un modèle pour une évolution dans le temps de la probabilité (P) du changement (A) d'une particularité (4) est déterminé.

4. Procédé selon la revendication 3, dans lequel pour l'évolution dans le temps, un tracé en dents de scie, périodique et/ou montant de manière surlinéaire en particulier par endroits, est déterminé.

5. Procédé selon l'une quelconque des revendications précédentes, dans lequel les particularités (4) dans l'environnement du véhicule (2) sont détectées en utilisant un système de capteurs d'environnement (18) et sont comparées aux particularités (4) de la carte numérique (12), dans lequel, si la comparaison indique une ambivalence, une priorisation et/ou une pondération (S10) des particularités (4) sont effectuées sur la base d'une disponibilité ou d'une actualité probable respective, déterminée à partir des attributs (13).

6. Procédé selon l'une quelconque des revendications précédentes, dans lequel, lors d'une mise à jour de la carte numérique (12), les attributs (13) affectés à une particularité respective (4), en particulier ses valeurs (15), sont adaptés en conséquence.

7. Système (1) de localisation de véhicule, présentant :
une carte numérique (12) qui décrit des particularités (4) d'un entourage (3) d'un véhicule (2), détectées par un système de capteurs d'environnement (18), et
une unité de localisation (11) pour localiser le véhicule (2) en utilisant la carte numérique (12),
dans lequel, pour tenir compte d'un changement (A) survenant au cours du temps d'une particularité (4) détectée par le système de capteurs d'environnement (18) en comparaison avec la particularité correspondante (4) de la carte numérique (12), la carte numérique (12) présente concernant la particularité respective (4) un ou plusieurs attributs prédéterminés (13), les attributs (13) présentant une indication concernant une durée de cycle (ZK) ou un taux de changement et une indication d'un temps (t₀) d'un dernier changement (A) d'une particularité (4), et
**caractérisé en ce que** l'unité de localisation (11) est aménagée pour déterminer une probabilité associée (P) du changement (A) de la particularité (4) à l'aide des attributs (13) et pour en tenir compte lors de la localisation du véhicule (2).

8. Système (1) selon la revendication 7, présentant en outre :
une unité de détection d'attributs (16) pour lire ou détecter les attributs prédéterminés (13), qui est reliée à une mémoire pour la carte numérique (12), et
une unité de mise à jour d'attributs (17) pour mettre à jour les attributs correspondants (13) et leurs valeurs (15) en réponse à une mise à jour des données cartographiques.

9. Système (1) selon la revendication 7 ou 8, dans lequel les particularités (4) présentent des particularités (4) créées ou influencées par l'homme, comme par exemple des marquages au sol, des ponts, des immeubles, le nombre de voies de circulation ou de portiques, des panneaux de signalisation.

10. Véhicule (2), en particulier véhicule autonome (2), dans lequel une unité de commande (19) du véhicule (2) est reliée à un système (1) de localisation de véhicule selon l'une quelconque des revendications 7 à 9, l'unité de commande (19) du véhicule (2) étant aménagée pour utiliser pour la localisation du véhicule (2) le procédé selon l'une quelconque des revendications 1 à 6.

11. Produit de programme informatique pour une utilisation en combinaison avec un véhicule (2), comprenant des instructions qui peuvent être chargées dans une mémoire qui est reliée à une unité de commande (19) du véhicule (2), dans lequel, lorsque les instructions sont exécutées par l'unité de commande (19), le véhicule (2) est localisé par le procédé selon l'une quelconque des revendications 1 à 6.
